# EUROPÄISCHE PATENTSCHRIFT

(11) **EP 0 229 284 B1**
(45) Veröffentlichungstag und Bekanntmachung des Hinweises auf die Patenterteilung: **21.08.1996**
(21) Anmeldenummer: 86116660.1
(22) Anmeldetag: 01.12.1986
(51) Int. Cl.: H01S 3/105, H01S 3/139, H01S 3/11

(54) **Verfahren und Anordnung zur wellenlängenselektiven internen Intensitätsmodulation und Strahlungsimpulserzeugung von Hochleistungs-CO2-Lasern**
Method and arrangement for wavelength-selective internal intensity modulation of CO2 high-power lasers and for radiation pulse generation in such lasers
Methode et dispositif de sélection interne de la longueur d'onde d'un laser de puissance à CO2, modulé en intensité et de génération d'une impulsion de radiation par un tel laser

(30) Priorität: 09.01.1986 DD 286072
(43) Veröffentlichungstag der Anmeldung: 22.07.1987
(73) Patentinhaber: Feinmechanische Werke Halle GmbH, D-06118 Halle (DE)
(72) Erfinder: Pöhler, Manfred, Dr. rer. nat., DDR-4090 Halle-Neustadt (DD); Staupendahl, Gisbert, Dr. sc. nat., DDR-4002 Halle (DD); Wittig, Richard, DDR-4002 Halle (DD)
(74) Vertreter: Radwer, Dieter

(56) Entgegenhaltungen:
- DE-A- 2 223 945
- DE-A- 2 415 971
- GB-A- 1 248 405
- GB-A- 2 000 900
- APPLIED OPTICS, Band 3, Nr. 3, März 1964, Seiten 431-432; A.D. WHITE: "Reflecting prisms for dispersive optical maser cavities"
- OPTICAL & QUANTUM ELECTRONICS, Band 12, Nr. 1, Januar 1980, Seiten 77-79, Chapman and Hall ltd, London, GB; G. STAUPENDAHL et al.: "A new simple method of 10nsCO2 laser pulse generation"

## Beschreibung

Die Erfindung betrifft ein Verfahren und eine Anordnung zur wellenlängenselektiven internen Intensitätsmodulation und Strahlungsimpulserzeugung von CO₂-Hochleistungslasern, vorzugsweise zum Einsatz bei Materialbearbeitungsaufgaben, wie Schneiden, Schweißen und Härten von Metallen oder Ritzen, Abtragen und Gravieren im Rahmen moderner Technologien der Elektronik-bzw. Mikroelektronikindustrie, der holzverarbeitenden Industrie, der Glas- und Druckindustrie u.a., sowie zur Lösung von Aufgaben mit speziellen Forderungen an die Strahlungsparameter, wie z.B. Isotopentrennung mittels Laser oder optisches Pumpen von Lasern für das ferne Infrarot.

Die interne, direkt im Laserresonator erfolgende Intensitätsmodulation und Strahlungsimpulserzeugung in Hochleistungs-CO₂-Lasern ist für die Erweiterung der Einsatzmöglichkeiten der Lasertechnik, insbesondere im Rahmen der genannten Einsatzgebiete, unbedingt erforderlich.

Insbesondere werden für eine derartige Modulation und Strahlungsimpulserzeugung Möglichkeiten zur externen Ansteuerung im Sinne frei wählbarer Parameter vor allem für die Impuls-Spitzenleistung bzw. Impulsdauer und die Impulsfolgefrequenz bis hin zu aperiodischen Impulsfolgen gefordert, wobei in zahlreichen Anwendungsfällen eine gleichzeitige Wellenlängenselektion wünschenswert bzw. unbedingt nötig ist.

Eine Möglichkeit zur Erzeugung von Gaslaser-Strahlungs-impulsen bietet das Prinzip des transversal angeregten Hochdruck-Gaslasers (TEA-Laser), das wegen der hohen Drücke des Lasergases die Realisierung außerordentlich hoher Impuls-Spitzenleistungen gestattet. Allerdings ist bei diesem Prinzip die Erzielung hoher Impuls-Folgefrequenzen außerordentlich problematisch, so erfordern schon Frequenzen von einigen Hundert Hertz einen enormen technischen Aufwand.

Die unterschiedlichen Methoden der Güteschaltung von Laser-Resonatoren führen zu starken Überhöhungen der Impuls-Spitzenleistung gegenüber der Leistung im kontinuierlichen Betrieb. Alle bisher realisierten Varianten weisen jedoch wesentliche Nachteile im Hinblick auf Laser-applikationen in den angeführten Einseatzbereichen auf.

Eine bereits von Flynn u. a. (IEEE Journal of Quantum Electronics, vol QE-2, 378 (1966)) dargestellte Methode der Gaslaser-Impulserzeugung, die aktive Gütesschaltung mittels Drehspiegel, ist insbesondore für die Material-bearbeitung ungeeignet, da sie ein ungünstiges zeitliches Tastverhältnis Laser an/Laser aus und damit einen beträchtlichen Verlust an mittlerer Strahlungsleistung ergibt. Außerdem können nur periodische Impulsfolgen erzielt werden.

In den Applied Physics Letters 11, 88 (1967) wird die Methode der passiven Güteschaltung von CO₂-Lasern mittels spezieller absorbierender Gase, die im Resonator angeordnet sind, dargestellt. Der Nachteil besteht hier darin, daß durch die genutzten Gase in Abhängigkeit von der jeweiligen Gasmischung einmal nur jeweils eine bestimmte Impuls-Folgefrequenz, die bei einigen kHz liegt, vorgegeben ist, und zum anderen auch die mittlere schaltbare Laserleistung begrenzt wird.

Die im sichtbaren Spektralbereich sehr effektive Methode der Modulation mittels des elektrooptischen Effecktes in Kristallen ist im mittleren Infrarotbereich um 10 Mikrometer Wellenlänge nur mit hohem Aufwand realisierbar, da sie in diesem Bereich große Kristall-Längen, die einerseits mit unvermeidlichen, relativ hohen Absorptionsverlusten und andererseits mit hohen Kosten verbunden sind und hohe Steuerspannungen für ausreichende Modulations-tiefen erfordert (siehe dazu bspw. IEEE Journal of Quantum Electronics, vol QE-2, 243 (1966)).

Die Intensität eines Lasers läßt sich auch dadurch steuern, daß an Stelle des teildurchlässigen Auskoppelspiegele eine interferometeranordnung mit abstimmbarer Transmission verwendet wird. Eine solche Anordnung wird sowohl in der DE-OS 2 223 945, als auch in der DE-OS 2 044 280 beschrieben. In beiden OS werden elektrooptische bzw. magnetooptische Effekte zur Abstimmung der Interferometeranordnung vorgeschlagen. Die beiden beschriebenen Anordnungen sind typisch, erstens für Laser in sichtbaren Spektralbereich und zweitens für Laser mit relativ niedriger mittlerer Ausgangsleistung. Ihre Anwendung auf Hochleistungs-CO₂-Laser ermöglicht nicht den gewünschten Effekt der wellenlängenselektiven Intensitätsmodulation und Strahlungsimpulserzeugung.

Eine weitere Methode, die Bragg-Beugung an akustooptisch erzeugten Phasengittern, leidet unter dem begrenzten Beugungsgrad, der zu Verlusten und einer relativ geringen Modulationstiefe führt, die für die CO₂-Laser-Materialberarbeitung ungeeignet ist.

Technisch vorrangig genutzt wird die Möglichkeit, den Entladungsstrom der Laser-Gasentladung zu modulieren. Dieser Mechanismus beschränkt jedoch prinzipiell die maximal erreichbare Modulationsfrequenz, wenn die Forderung nach ausreichender Modulationstiefe erfüllt werden soll. Die Grenzfrequenz liegt für Hochleistungs-CO₂-Laser bei etwa 2,5 kHz, wobei ab etwa 1 kHz mit steigender Frequenz auch steigende Verluste in der Laserleistung auftreten. Außerdem beschränkt der Mechanismus der elektrischen Pulsung der Gasentladung die erreichbare Überhöhung der Impulsspitzenleistung auf etwa einen Faktor 10, da sich die Prozesse des Aufbaus der Besetzungsinversion durch die Gasentladung und des Abbaus der Inversion durch das Anschwingen des Lasers zeitlich überlappen.

Einen Versuch, die Grenzfrequenz zu erhöhen, stellt die in der DE-OS 2 816 659 vorgeschlagene Anordnung dar, bei der ein Gaslaser mindestens zwei in Serie geschaltete Gasentladungsröhren besitzt, die nacheinander mit definiertem Zeitunterschied mittels entsprechender Stromimpulse gepumpt werden können. Dadurch ist es möglich, die durch den Pumpmechanismus des Gaslasers vorgegebene Grenzfrequenz zu erhöhen, wobei allerdings entsprechend der Frequenzerhöhung die Energie der einzelnen Strahlungsimpulse sinkt. Außerdem steigt der apparative Aufwand beträchtlich.

Aus der DE - A - 2 415 971 und GB - A - 1 248 405 sind ferner Lösungen bekannt, in denen Fabry-Perot-Interferometeranordnungen zur Modulation von Laserstrahlungen eingesetzt werden. In beiden Anwendungsfällen erfolgt mit Hilfe der Fabry-Perot-Interferometer eine Modulation der Frequenz der Laserstrahlung.

Der Erfindung liegt die Aufgabe zugrunde, ein Verfahren und eine Anordnung zur wellenlängenselektiven internen Intensitätsmodulation und zur Strahlungsimpulserzeugung von Hochleistungs-CO₂-Lasern für die Materialbearbeitung zu entwickeln, die höchste Bearbeitungsqualität durch definierte, der jeweiligen Arbeitsaufgabe optimal angepaßte Strahlunsparameter und genaue Führung des Bearbeitungsprozesses sowie eine hohe Arbeitsproduktivität ermöglichen.

Diese Aufgabe wird durch ein Verfahren und eine Anordnung gelöst, die durch die im Anspruch 1 und 3 angegebenen Merkmale gekennzeichnet ist, wobei die Lösung auf einer neuen, schnellen Güteschaltung von Hochleistungs-CO₂-Lasern beruht. Eine weitere vorteilhafte Ausgestaltung des Verfahrens ist durch die Merkmale nach Unteranspruch 2 gegeben.

Die vorgeschlagene Lösung ist der bisher vorrangig genutzten elektrischen Modulation bzw. Pulsung der Lasergasentladung in ihren wesentlichen Parametern eindeutig überlegen, wobei neben der optimalen Umsetzung der zur Verfügung stehenden mittleren Laserleistung in Strahlungsimpulsleistung auch eine außerordentlich flexible Anpassung der Strahlungsparameter an die jeweilige Materialbearbeitungsaufgabe gewährleistet ist. Die Erfindung gestattet ferner die Erzeugung definierter Impulsfolgen bei starker Überhöhung der Impulsspitzenleistung und eine hohe Impulsfolgefrequen bis zu mehreren kHz bei gleichzeitiger Selektion einer geforderten Wellenlänge, vorzugsweise im Infrarotbereich, mit hoher Genauigkeit und Reproduzierbarkeit.

Wird ein Hochleistungs-CO₂-Laser erstens mit Hilfe eines innerhalb des Resonators angeordneten, frequenzselektiven Elementes gezwungen, auf einer frei wählbaren, aber festen Wellenlänge zu arbeiten und zweitens durch Verwendung spezieller Gasentladungsröhren gemäß WP H 01 S/199 976 (GB-A-2000900) erreicht, daß der Laser bei entsprechender Resonatorkonfiguration, insbesondere entsprechender Wahl des Krümmungsradius' des einen Resonatorspiegels mit fester Reflektivität R₁, im TEM OO - Betrieb arbeitet und ein Anschwingen über Reflexionen an den Röhrenwänden verhindert wird, so steht am Laserausgang ein praktisch ebenes, monochromatisches Wellenfeld zur Verfügung. Diese Eigenschaft wird erfindungsgemäß genutzt, um die Güte des Laserresonators so zu modulieren, daß die Nachteile der herkömmlichen Methode der Güteschaltung, insbesondere die zeitweise Dejustierung der Resonatorkonfiguration bei der aktiven und das Einbringen von Absorbern in den Resonator bei der passiven Güteschaltung, die jeweils mit beträchtlichen Verlusten an mittlerer Laserleistung verbunden sind, vermieden werden.

Der zweite Resonatorspiegel wird als an sich bekannte Interferometeranordnung vom Fabry-Perot-Typ ausgebildet, die vorzugsweise aus zwei aus transparentem Material, vorzugsweise Ge, GaAs oder ZnSe, bestehenden Platten gebildet wird. Diese Platten sind auf den beiden einander zugewandten, ebenen und parallel zueinander ausgerichteten Seiten für die Laserwellenlänge im gewünschten Maße verspiegelt, während die gegenüberliegenden Seiten entspiegelt sind. Die optische Weglänge n · d (d = geometrischer Abstand der beiden Interferometerflächen, n = Brechzahl des Mediums zwischen den Flächen) zwischen den beiden Interferometerflächen soll relativ klein, minimal etwa in der Größenordnung der Laserwellenlänge, maximal etwa 1 mm sein. Die ausgezeichnete Interferenzfähigkeit des mit Hilfe des frequenzselektiven Elementes und der winkelselektiven Gasentladungsröhre erzeugten ebenen, monochromatischen Wellenfeldes ermöglicht es dann, durch Variation der optischen Weglänge n · d die effektive Reflektivität R₂ dieser Interferometeranordnung in weiten Grenzen zwischen Rₘᵢₙ ≈ o und einem durch die Reflektivität der beiden Interferometerflächen vorgegebenen Maximalwert Rₘₐₓ zu ändern, was bei verschwindend kleiner Absorption bedeutet, daß die Transmission des Systems zwischen Tₘₐₓ≈1 und Tₘᵢₙ ≈ 1-Rₘₐₓ variiert werden kann.

Gemäß der Erfindung ist dieses spezielle Bauelement so konstruiert, daß durch entsprechende Steuersignale die optische Weglänge zwischen den Interferometerplatten mit möglichst hoher Grenzfrequenz (mehrere kHz werden angestrebt) moduliert werden kann. Ändert sich dabei R₂ in definiert ausreichend weiten Grenzen, so werden die Resonator-Gesamtverluste, also die Güte des Resonators, so beeinflußt, daß die Intensität der entstehenden Laserstrahlung mit großer Modulationstiefe und hoher Geschwindigkeit moduliert wird. Bei ausreichend schneller Änderung der Resonator-Gesamtverluste von einem Zustand, in dem sich der Laser unterhalb seiner Arbeitsschwelle befindet (dieser Zustand wird im allgemeinen relativ kleinem R₂ entsprechen), in einen Zustand mit voller Laserfunktion (dieser Zustand entspricht im allgemeinen relativ großem R₂), werden durch diese erfindungsgemäße Verfahrensweise Strahlungsimpulse mit starker Leistungsüberhöhung erzielt.

Die dargestellte Anordnung zur wellenlängenselektiven internen Intensitätstmodulation und Strahlungsimpulserzeugung eines Hochleistungs-CO₂-Lasers ermöglicht eine neuartige Methode der schnellen Stabilisierung der Ausgangsleistung des Lasers, wenn dieser im cw-Betrieb arbeitet. Zu diesem Zwecke wird über einen Strahlteiler ein Bruchteil des Arbeitsstrahles einem schnellen Strahlungsdetektor zugeführt, dessen Meßsignal in einem Elektronikbaustein verstärkt und mit einem Soll-Wert verglichen wird. Die aus der Abweichung zwischen Soll- und Ist-Wert resultierende Regelgröße wird nach einem weiteren Merkmal der Erfindung dazu verwendet, die variable Reflektivität R₂ der speziellen Interferometeranordnung so einzustellen, daß der vorgegebene Soll-Wert der Laserleistung gewährleistet ist. Dabei wird ausgenutzt, daß die Ausgangsleistung des Lasers eine Funktion der Resonator-Gesamtverluste, also auch eine Funktion von R₂ ist. Die Zeitkonstante dieser Regelung wird durch die Zeitkonstanten vom Detektor, der Regelelektronik und der Interferometeranordnung bestimmt und kann mühelos τ ≾ 100 µs betragen. Sie ist damit den üblichen Regelungen, die auf der Variation des Gasentladungsstromes basieren, weit überlegen.

Die Erfindung soll nachstehend an einem Ausführungsbeispiel näher erläutert werden.

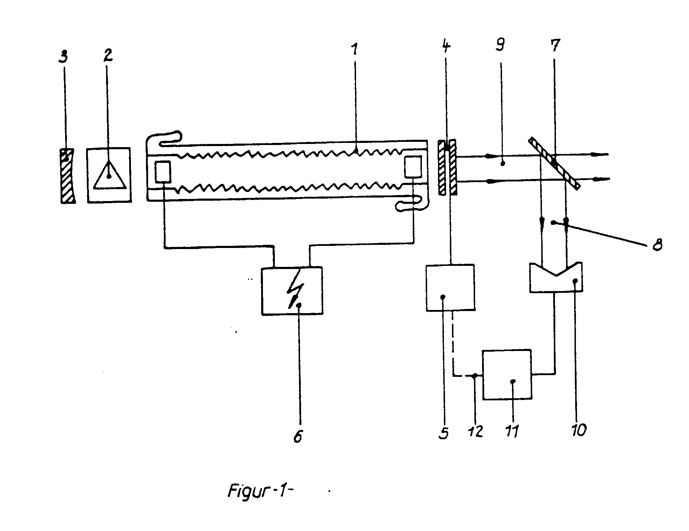

Figur 1 zeigt eine Anordnung zur wellenlängenselektiven Intensitätsmodulation und Strahlungsimpulserzeugung eines Hochleistungs-CO₂-Lasers für die Materialbearbeitung. Die spezielle Gasentladungsröhre 1 gemäß WP H 01 S/ 199 976 und das frequenzselektive Element 2 sorgen dafür, daß der Laser bei entsprechender Resonatorkonfiguration, insbesondere entsprechender Abstimmung des Innendurchmessers der Gasentladungsröhre 1 und des Krümmungsradius' des Resonatorspiegels 3 mit der festen Reflektivität R₁, im TEM OO-Betrieb arbeitet. Dann steht am Ort der speziellen Interferometeranordnung 4 das geforderte ebone und monochromatische Wellenfeld zur Verfügung. Die spezielle Interferometeranordnung 4 wird vorzugsweise durch den Modulator gemäß WP H01S/264005(EP-A-167843) gebildet. Die Modulation der Laserstrahlungsleistung erfolgt in der oben dargestellten Weise über die Änderung der Reflektivität R₂ dieses Modulators mittels elektrischer Steuersignale, die die elektrische Versorgungseinheit 5 bereitstellt. Die Stromversorgung der Gasentladung erfolgt über die Stromversorgungseinrichtung 6. Zum Zwecke der schnellen Stabilisierung der Laserleistung des im cw-Betrieb arbeitenden Hochleistungs-CO₂-Lasers wird über einen Strahlteiler 7, vorzugsweise einer Prismenlinse gemäß WP H 01 S/204 920 (DE-A-2914216), ein Bruchteil 8 des Arbeitsstrahls 9 einem schnellen Strahlungsdetektor 10 zugeführt. Das Meßsignal wird in einem Elektronikbaustein 11 verarbeitet und die aus einem Soll-Ist-Wert-Vergleich resultierende Regelgröße 12 über die elektrische Versorgungseinrichtung 5 der speziellen Interferometeranordnung 4 dazu genutzt, die variable Reflektivität R₂ so einzustellen, daß der vorgegebene Soll-Wert der Laserleistung gewährleistet ist.

## Patentansprüche

1. Verfahren zur wellenlängenselektiven internen Intensitätsmodulation und Strahlungsimpulserzeugung von Hochleistungs-CO₂-Lasern unter Verwendung einer Fabry-Perot-Interferometeranordnung, **dadurch gekennzeichnet,** daß der Hochleistungs-CO₂-Laser mittels eines ersten Resonatorspiegels (3) mit fester Reflektivität R₁, eines frequenzelektiven Elementes (2) und einer winkelselektiven Gasentladungsröhre (1) gezwungen wird, auf einer vorgegebenen festen Wellenlänge im TEMOO Mode zu arbeiten, wobei die Resonatorgesamtverluste mittels einer steuerbaren Fabry-Perot-Interferometeranordnung (4), die einen Modulator mit hoher Grenzfrequenz darstellt und als zweiter Resonatorspiegel mit variierbarer Reflektivität R₂ dient, entweder konstant so eingestellt werden, daß die kontinuierliche Ausgangsleistung des CO₂-Lasers auf der gewählten Wellenlänge maximal ist oder so schnell und in so weiten Grenzen geändert werden, daß die Intensität der entstehenden Laserstrahlung entweder mit großer Modulationstiefe und hoher Geschwindigkeit moduliert wird oder daß sich bei ausreichend schneller Änderung der Resonatorgesamtverluste von einem Zustand, in dem sich der Laser unterhalb seiner Arbeitsschwelle befindet, in einen Zustand mit voller Laserfunktion Strahlungsimpulse mit starker Leistungsüberhöhung erzeugen lassen.

2. Verfahren nach Anspruch 1, **dadurch gekennzeichnet**, daß über einen Strahlteiler (7) ein Bruchteil (8) des Arbeitsstrahles (9) einem schnellen Strahlungsdetektor (10) zugeführt wird, dessen Meßsignal in einem Elektronikbaustein (11) so verarbeitet wird, daß die aus einem Soll-Ist-Wert-Vergleich resultierende Regelgröße (12) über die elektrische Versorgungseinrichtung (5) der steuerbaren Interferometeranordnung (4) dazu genutzt wird, die variierbare Reflektivität R₂ so einzustellen, daß der vorgegebene Soll-Wert der Laserleistung gewährleistet ist.

3. Anordnung zur wellenlängenselektiven internen Intensitätsmodulation und Strahlungsimpulserzeugung von Hochleistungs-CO₂-Lasern mit einer Spannungsquelle (6) einem Resonator (1;2;3) und einem Modulator (4) in Form einer Fabry-Perot-Interferometeranordnung, **dadurch gekennzeichnet**, daß der Laserresonator aus
- einem ersten Resonatorspiegel (3) mit fester Reflektivität R₁,
- einem frequenzselektiven Element (2),
- einer stark winkelselektiven Gasentladungsröhre (1), die in Zusammenwirken mit dem frequenzselektiven Element (2) und durch Abstimmung ihres Innendurchmessers zum Krümmungsradius des erstem Resonatorspiegels (3) im TEM OO-Betrieb arbeitet, und
- einer Fabry- Perot-Interferometeranordnung (4) mit schnell veränderbarer optischer Weglänge, aus für die Laserstrahlung transparentem Material, besteht, welche als zweiter Resonatorspiegel mit variierbarer Reflektivität R₂ fungiert und einen Modulator mit hoher Grenzfrequenz darstellt, wobei die optische Weglänge mittels entsprechender Steuersignale so verändert werden kann, daß die Reflektivität R₂ zwischen Null und einem Maximum einstellbar und der jeweilige Wert von R₂ eine Funktion der Laserwellenlänge ist.

## Claims

1. A method of wavelength-selective internal intensity modulation and radiation pulse generation in CO₂ high-power lasers using a Fabry-Perot interferometer arrangement, characterized in that the CO₂ high-power laser is caused by a first cavity mirror (3) having fixed reflexivity R₁, a frequency-selective element (2) and an angle-selective gas discharge tube (1) to lase at a predetermined fixed wavelength in the TEM 00 mode, wherein by means of a controllable Fabry-Perot interferometer arrangement (4), which constitutes a modulator having high threshold frequency and serves as a second cavity mirror having variable reflexivity R₂, the cavity total loss is either adjusted to be constant so that the continuous output power of the CO₂ laser is at its maximum at the selected wavelength, or is adjusted at such a high speed und within such a wide range that the intensity of the laser radiation being geherated is either modulated at high modulation depth and high speed or, provided that the cavity total loss varies sufficiently fast from a state in which the laser is below its lasing threshold to a state of full lasing operation, radiation pulses of highly superelevated power can be generated.

2. A method according to Claim 1, characterized in that a fraction (8) of a process beam (9) is transmitted through a beam splitter (7) to a high-speed radiation detector (10) the sensing signal from which is processed in an electronic module (11) in such a manner that the controlled variable (12) resulting from a comparison between desired and actual values is used by the power supply unit (5) of the controllable interferometer arrangement (4) to adjust the variable reflexivity R₂ in such a manner that meeting the predetermined desired value of laser power is ensured.

3. An arrangement for wavelength-selective internal inensity modulation and radiation pulse generation in CO₂ high-power lasers, comprising a voltage source (6), a cavity (1; 2; 3), and a modulator (4) in the form of Fabry-Perot interferometer arrangement, characterized in that the laser cavity comprises:
- a first cavity mirror (3) having fixed reflexivity R₁,
- a frequency-selective element (2)
- a highly angle-selective gas discharge tube (1) which, in cooperation with the frequency-selective element (2) and by adapting its internal diameter to the radius of curvature of the first cavity mirror (3), lases in the TEM 00 mode, and
- a Fabry-Perot interferometer arrangement (4) including high-speed variable optical path length, made of material transparent to laser radiation, which arrangement functions as a second cavity mirror having variable reflexivity R₂ and constitutes a modulator having high threshold frequency, said optical path length being capable of being varied in such a manner that the reflexivity R₂ is adjustable between zero and a maximum and the respective value of R₂ is a function of the lasing wavelength.

## Revendications

1. Méthode de sélection interne d'une longueur d'onde d'un laser de puissance à CO₂, modulé en intensité, et de génération d'une impulsion de radiation par un tel laser en utilisant un dispositif interférentiel de Fabry et Pérot, **caractérisée par le fait que** le laser de puissance à CO₂ est contraint de travailler, en mode TEM 00 sur une longueur d'onde prédéfinie et fixe, au moyen d'un premier miroir de résonateur (3) à réflectivité R₁ fixe, d'un élément sélecteur de fréquence (2) et d'un tube à gaz (1) sélecteur d'angle, le total des pertes de résonateur pouvant être, au moyen d'un dispositif interférentiel de Fabry et Pérot (4) susceptible d'être commandé et représentant un modulateur à haute fréquence limite ou servant de second miroir de résonateur à réflectivité R₂ susceptible de varier, soit réglées de façon constante si bien que la puissance de sortie en continu du laser CO₂ est au maximum de la longueur d'onde choisie, soit modifiées tellement rapidement et dans des limites tellement grandes que l'intensité de la radiation laser qui apparaît est soit modulée à une grande profondeur de modulation et à une vitesse élevée, soit on peut générer des impulsions de radiation à forte élévation de puissance en modifiant suffisamment rapidement le total des pertes de résonateur en partant d'un état dans lequel le laser se trouve en-dessous de son seuil de travail vers un état de pleine fonction laser.

2. Méthode selon la revendication 1, **caractérisée par le fait qu**'une fraction (8) du rayon de travail (9) est amenée par l'intermédiaire d'une lame séparatrice (7) à un détecteur rapide de radiation (10) dont le signal de mesure est traité dans un composant électronique (11) de telle façon que la variable normale (12) résultant d'une comparaison valeur de consigne/valeur effective est utilisée par l'intermédiaire de l'installation d'alimentation électrique (5) du dispositif interférentiel (4) susceptible d'être commandé afin de régler la réflectivité R₂ susceptible de varier de telle façon que la valeur prédéfinie de consigne de la puissance du laser est garantie.

3. Dispositif de sélection interne d'une longueur d'onde d'un laser de puissance à CO2, modulé en intensité, et de génération d'une impulsion de radiation par un tel laser muni d'une source de tension (6), d'un résonateur (1;2;3) et d'un modulateur (4) en forme de dispositif interférentiel de Fabry et Pérot, **caractérisé par le fait que** le résonateur laser est composé
- d'un premier miroir de résonateur (3) à réflectivité R1 fixe,
- d'un élément sélecteur de fréquence (2),
- d'un tube à gaz (1) à forte sélection d'angle qui travaille en fonctionnement TEM 00 avec le concours de l'élément sélecteur de fréquence (2) et par le raccordement de son diamètre intérieur au rayon de courbure du premier miroir de résonateur (3), et
- d'un dispositif interférentiel de Fabry et Pérot (4) à longueur d'onde optique susceptible d'être modifiée, composé d'un matériau transparent à la radiation laser, faisant fonction de second miroir de résonateur avec une réflectivité R₂ susceptible de varier et représentant un modulateur à haute fréquence limite, la longueur d'onde optique pouvant être modifiée au moyen de signaux correspondants de commande de telle façon que la réflectivité R₂ est susceptible d'être réglée entre zéro et un maximum et la valeur respective de R₂ étant une fonction de la longueur d'onde du laser.
